# EUROPEAN PATENT APPLICATION

(11) **EP 2 595 031 A2**
(43) Date of publication of application: **22.05.2013**
(21) Application number: 12193040.8
(22) Date of filing: 16.11.2012
(51) Int. Cl.: G06F 3/01, G06F 3/00, G06F 3/03, G06K 9/00

(54) **Display apparatus and control method thereof**

(30) Priority: 16.11.2011 KR 20110119504; 25.09.2012 KR 20120106391
(71) Applicant: Samsung Electronics Co., Ltd, Gyeonggi-do 443-742 (KR)
(72) Inventor: Kim, Sang-yoon, Gyeonggi-do (KR); Ryu, Hee-seob, Gyeonggi-do (KR); Park, Kyung-mi, Gyeonggi-do (KR); Jeong, Ki-jun, Seoul (KR); Park, Seung-kwon, Gyeonggi-do (KR)
(74) Representative: Walaski, Jan Filip

(57) **Abstract**

Disclosed are a display apparatus and a control method thereof, the display apparatus including: an image acquirer which acquires an image of a plurality of users; a display which displays the image acquired by the image acquirer; and a controller which selects a user making a predetermined gesture among the plurality of users in the image and controls the display apparatus to perform an operation corresponding to the selected user out of operations which are capable of being performed by the display apparatus when the image of the plurality of users is acquired through the image acquirer and the predetermined gesture is recognized from the acquired image.

## Description

The present invention relates to a display apparatus and a control method thereof, and more particularly, to a display apparatus and a control method thereof which selects one of a plurality of users by using user information.

There are increasing numbers of electronic devices which use a user's biometric information. For example, a digital camera or a camera of a smart phone may focus on a user's face within a frame by using a face recognition function. Further, there is an electronic device which uses a user's biometric information as a user's account.

However, in the case of conventional face recognition technology, if one of a plurality of users in an image is to be selected, a face which accounts for the largest part of the image or a face which is located in a center of the image is selected, which may be inconsistent with a user's intention.

Accordingly, one or more exemplary embodiments provide a display apparatus and a control method thereof which selects and recognizes a user in an image of a plurality of users according to a user's action.

According to an exemplary embodiment, the foregoing and/or other aspects may be achieved by providing a display apparatus including: an image acquirer which acquires an image of a plurality of users; a display which displays the image acquired by the image acquirer; and a controller which selects a user making a predetermined gesture among the plurality of users in the image and controls the display apparatus to perform an operation corresponding to the selected user out of operations which are capable of being performed by the display apparatus when the image of the plurality of users is acquired through the image acquirer and the predetermined gesture is recognized from the acquired image.

The operation to be performed may include at least one of setting an ID, logging in, and zooming in and displaying the selected user.

The display apparatus may further include a storage which stores face recognition information of a plurality of users, wherein the controller analyzes face recognition information of the selected user, compares the analyzed face recognition information with the stored face recognition information of the plurality of users, and when the analyzed face recognition information is consistent with an entry in the stored face recognition information, performs an operation corresponding to the selected user.

The controller may control the storage to store the face recognition information of the selected user when the analyzed face recognition information of the selected user is not consistent with any entries in the stored face recognition information.

The controller may control the storage to store metadata corresponding to the stored face recognition information of the plurality of users.

The metadata may include at least one of display setting data, an address book, visit records and a viewing history of the display apparatus.

The display apparatus may further include a broadcasting signal receiver which receives a broadcasting signal and a signal processor which processes the received broadcasting signal and controls the processed broadcasting signal to be displayed on the display.

The display apparatus may further include a communicator which communicates with an external web server to retrieve content from the external web server to be displayed on the display.

According to another exemplary embodiment, the foregoing and/or other aspects may be achieved by providing a display apparatus including: an image acquirer which acquires an image of a plurality of users; a voice acquirer which acquires a voice command; an outputter which outputs the acquired image and the acquired voice command; and a controller which selects a user corresponding to the voice command acquired by the voice acquirer and controls the display apparatus to perform an operation corresponding to the selected user out of operations which are capable of being performed by the display apparatus when the image of the plurality of users is acquired through the image acquirer and the voice command is acquired through the voice acquirer.

The operation to be performed may include at least one of setting an ID, logging in and zooming in and displaying the selected user.

The display apparatus may further include a storage which stores voice recognition information and face recognition information of a plurality of users, wherein the controller analyzes the acquired voice command and, when the analyzed voice command is consistent with an entry in the voice recognition information, selects the voice recognition information that is consistent with the analyzed voice command from the stored voice recognition information, selects face recognition information corresponding to the selected voice recognition information from the stored face recognition information, analyzes the acquired image and compares the analyzed image with the selected face recognition information, and when the acquired image is consistent with an entry in the selected face recognition information, performs an operation corresponding to the selected user.

The controller may analyze voice location information of the voice command acquired by the voice acquirer, select one of the plurality of users based on the analyzed voice location information, analyze face recognition information of the selected user and control the storage unit to store the analyzed face recognition information and voice recognition information when the analyzed voice command is not consistent with any of a plurality of entries of the voice recognition information stored in the storage unit.

The controller may control the storage to store metadata corresponding to the stored voice recognition information and face recognition information of a plurality of users.

The metadata may include at least one of display setting data, an address book, visit records and a viewing history of the display apparatus.

The display apparatus may further include a broadcasting signal receiver which receives a broadcasting signal and a signal processor which processes the received broadcasting signal and controls the processed broadcasting signal to be displayed on the display apparatus.

The display apparatus may further include a communicator which communicates with an external web server to retrieve content from the external web server to be displayed on the display apparatus.

According to another exemplary embodiment, the foregoing and/or other aspects may be achieved by providing a display apparatus including: an image acquirer which acquires an image of a plurality of users; a remote signal receiver which receives a signal from a remote controller; and a controller which selects a user corresponding to information of the remote controller from the plurality of users and controls the display apparatus to perform an operation corresponding to the selected user out of operations which are capable of being performed by the display apparatus when the image including the plurality of users is acquired through the image acquirer and the information is acquired through the remote controller.

The operation to be performed may include at least one of setting an ID, logging in and zooming in and displaying the selected user.

The remote controller may further include a microphone which acquires a voice command, and the controller may analyze the voice command acquired through the microphone of the remote controller and select a user having a characteristic which is consistent with the analyzed voice command out of the plurality of users.

The characteristic of the user may include at least one of a gender and age of the user or a combination thereof.

The remote controller may have a predetermined shape or color, and the controller may detect the remote controller from an image acquired through the image acquirer, acquire location information of the remote controller and select a user based on the location information of the remote controller when the image of the remote controller is acquired through the image acquirer.

The location information of the remote controller may be used to select a user by taking into account at least one of a location of a user's arm, a user's profile, a user's posture, and a distance between a user and the remote controller.

The remote controller may transmit a signal, and the controller may receive the signal through the remote signal receiver, acquire location information of the remote controller based on the signal and select a user based on the location information of the remote controller.

The remote controller may transmit an infrared signal, and the remote signal receiver may include a plurality of infrared receivers to receive the infrared signal.

The display apparatus may further include a storage which stores voice recognition information and face recognition information of the plurality of users, wherein the controller controls the storage to store metadata corresponding to the stored voice recognition information and face recognition information of the plurality of users.

The metadata may include at least one of display setting data, an address book, visit records and a viewing history of the display apparatus.

The display apparatus may further include a broadcasting signal receiver which receives a broadcasting signal and a signal processor which processes the received broadcasting signal and controls the processed broadcasting signal to be displayed on the display apparatus.

The display apparatus may further include a communicator which communicates with an external web server to retrieve content from the external web server to be displayed on the display apparatus.

According to another exemplary embodiment, the foregoing and/or other aspects may be achieved by providing a control method of a display apparatus including: acquiring an image of a plurality of users; recognizing a predetermined gesture from the acquired image; and selecting a user who has made the predetermined gesture from the plurality of users and controlling the display apparatus to perform an operation corresponding to the selected user out of operations which are capable of being performed by the display apparatus.

The operation to be performed may include at least one of setting an ID, logging in and zooming in and displaying the selected user.

The control method may further include: storing face recognition information of a plurality of users; and analyzing face recognition information of the selected user, comparing the analyzed face recognition information with the stored face recognition information of the plurality of users, and when the analyzed face recognition information is consistent with an entry in the stored face recognition information, performing an operation corresponding to the selected user.

The control method may further include storing the face recognition information of the selected user when the analyzed face recognition information is not consistent with any entries in the stored face recognition information.

The control method may further include storing metadata corresponding to the stored face recognition information of the plurality of users.

The metadata may include at least one of display setting data, an address book, visit records and a viewing history of the display apparatus.

The control method may further include: receiving a broadcasting signal; processing the received broadcasting signal; and displaying the processed broadcasting signal on the display apparatus.

The control method may further include communicating with an external web server to retrieve content from the external web server; and displaying the processed broadcasting signal on the display apparatus.

A control method of a display apparatus may include: acquiring an image of a plurality of users; acquiring a voice command; and selecting a user corresponding to the voice command from the plurality of users and controlling the display apparatus to perform an operation corresponding to the selected user out of operations which are capable of being performed by the display apparatus.

The operation to be performed may include at least one of setting an ID, logging in and zooming in and displaying the selected user.

The control method may further include storing voice recognition information and face recognition information of a plurality of users; analyzing the acquired voice command and, when the analyzed voice command is consistent with an entry of the voice recognition information, selecting the entry of the voice recognition information that is consistent with the analyzed voice command from the stored voice recognition information; selecting face recognition information corresponding to the selected voice recognition information from the stored face recognition information; analyzing the acquired image and comparing the analyzed image with the selected face recognition information, and when the analyzed image is consistent with the selected face recognition information, performing an operation corresponding to the selected user.

The control method may further include, when the analyzed voice command is not consistent with any entries of the stored voice recognition information of the plurality of users, analyzing voice location information of the voice command acquired through a voice acquirer and selecting one of the plurality of users based on the analyzed voice location information, analyzing face recognition information of the selected user and storing the analyzed face recognition information and the analyzed voice recognition information.

The control method may further include storing metadata corresponding to the stored voice recognition information and face recognition information of the plurality of users.

The metadata may include at least one of display setting data, an address book, visit records and a viewing history of the display apparatus.

The control method may further include: receiving a broadcasting signal; processing the received broadcasting signal; and displaying the processed broadcasting signal on the display apparatus.

The control method may further include communicating with an external web server to retrieve content from the external web server; and displaying the retrieved content on the display apparatus.

According to another exemplary embodiment, the foregoing and/or other aspects may be achieved by providing a control method of a display apparatus including: acquiring an image of a plurality of users; acquiring information from a remote controller; and selecting a user corresponding to the information from the remote controller from the plurality of users and controlling the display apparatus to perform an operation corresponding to the selected user out of operations which are capable of being performed by the display apparatus.

The operation to be performed may include at least one of setting an ID, logging in and zooming in and displaying the selected user.

The control method may further include acquiring a voice command through a microphone of the remote controller, wherein the selecting the user corresponding to the information of the remote controller from the plurality of users further includes analyzing the voice command acquired through the microphone of the remote controller and selecting the user having a characteristic that is consistent with the analyzed voice command from the plurality of users. The characteristic may include at least one of a gender and age of a user or a combination thereof.

The remote controller may have a predetermined shape or color, and the selecting the user corresponding to the information of the remote controller from the plurality of users further includes detecting the remote controller from an acquired image to acquire location information of the remote controller and selecting a user based on the location information of the remote controller when the image including the remote controller is acquired.

The location information of the remote controller may be used to select a user by taking into account at least one of a location of a user's arm, a user's profile, a user's posture, and a distance between a user and the remote controller.

The remote controller may transmit a signal, and the selecting the user corresponding to the information of the remote controller from the plurality of users may further include receiving the signal, acquiring location information of the remote controller based on the signal and selecting a user based on the location information of the remote controller.

The control method may further include: storing voice recognition information and face recognition information of a plurality of users; and storing metadata corresponding to the stored voice recognition information and face recognition information of the plurality of users. The metadata may include at least one of display setting data, an address book, visit records and a viewing history of the display apparatus.

The control method may further include: receiving a broadcasting signal; processing the received broadcasting signal; and displaying the processed broadcasting signal on the display apparatus.

The control method may further include communicating with an external web server to retrieve content from the external web server; and displaying the retrieved content on the display apparatus.

The foregoing and/or other aspects may be achieved by providing a recording medium which records a program that causes a computer to execute the control methods according to exemplary embodiments.

According to another exemplary embodiment, there is provided an interactive display, including: an image acquirer which acquires an image of a plurality of users; and a controller which selects a user from among the plurality of users by identifying a designated action performed by the user in the acquired video, and performs an operation corresponding to the selected user.

According to another exemplary embodiment, there is provided an interactive display, including: an image acquirer which acquires an image of a plurality of users; a voice acquirer which acquires a voice command; and a controller which selects a user from among the plurality of users based on a combination of the acquired image and the acquired voice command, and performs an operation corresponding to the selected user.

The above and/or other aspects will become apparent and more readily appreciated from the following description of the exemplary embodiments, taken in conjunction with the accompanying drawings, in which:
FIG. 1 is a control block diagram of a display apparatus according to an exemplary embodiment;
FIGS. 2 to 6 illustrate an operation of a controller of the display apparatus in FIG. 1;
FIG. 7 illustrates another operation of the controller of the display apparatus in FIG. 1;
FIG. 8 is a control block diagram of a display apparatus according to another exemplary embodiment;
FIGS. 9 to 13 illustrate an operation of a controller of the display apparatus in FIG. 8;
FIG. 14 is a control block diagram of a display apparatus according to another exemplary embodiment;
FIGS. 15 to 20 illustrate an operation of a controller of the display apparatus in FIG. 14;
FIG. 21 is a control block diagram of a display apparatus according to another exemplary embodiment;
FIGS. 22 to 26 illustrate an operation of a controller of the display apparatus in FIG. 21;
FIGS. 27 to 31 illustrate another operation of the controller of the display apparatus in
FIG. 21;

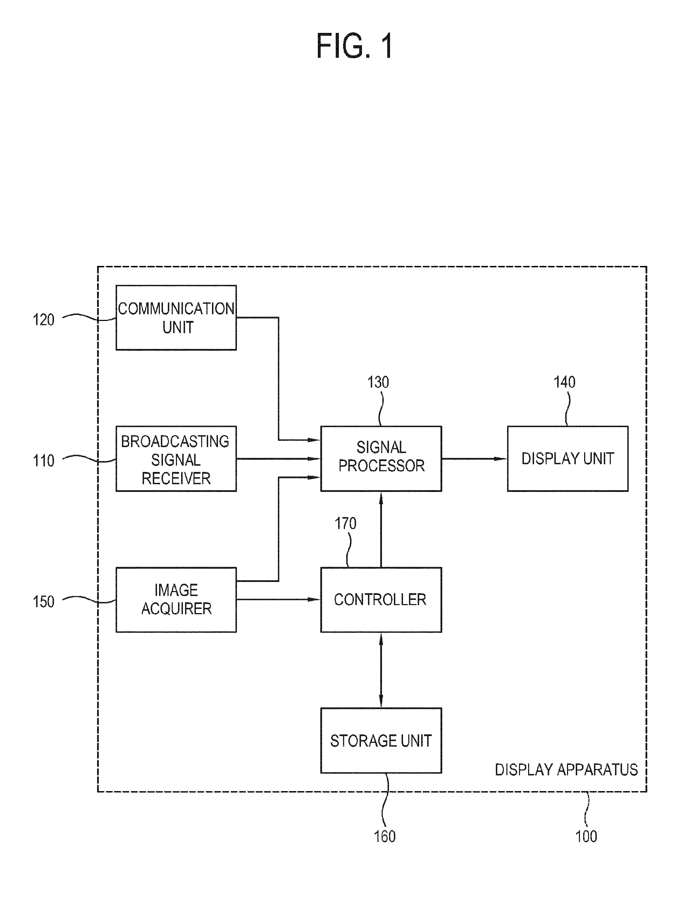

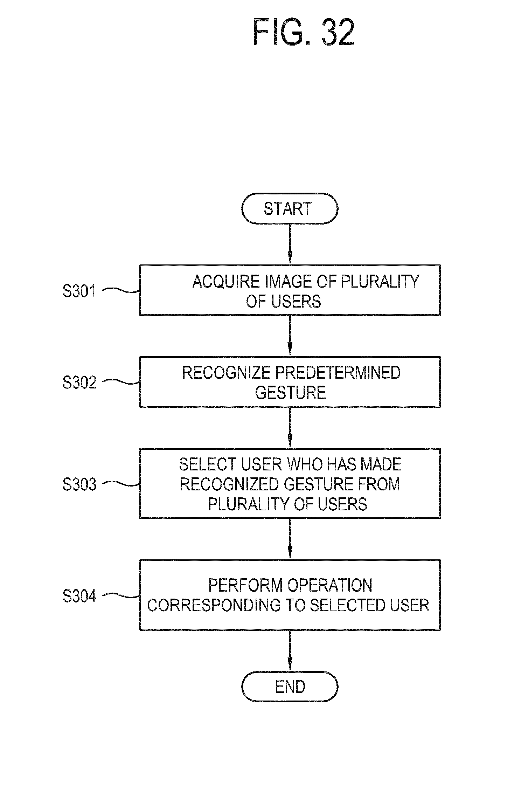

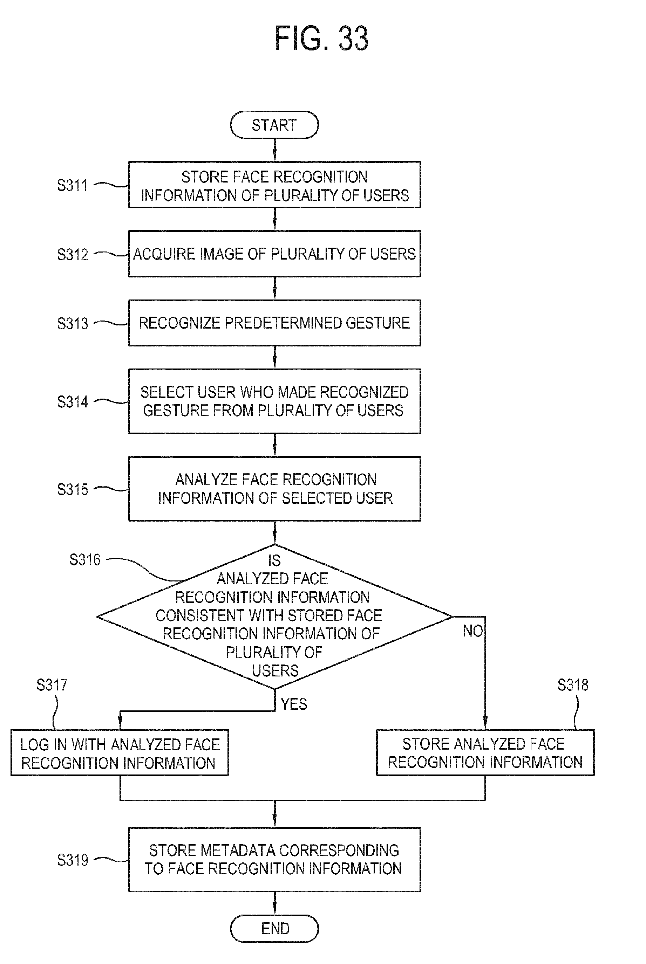

FIGS. 32 and 33 are control flowcharts of the display apparatus in FIG. 1;

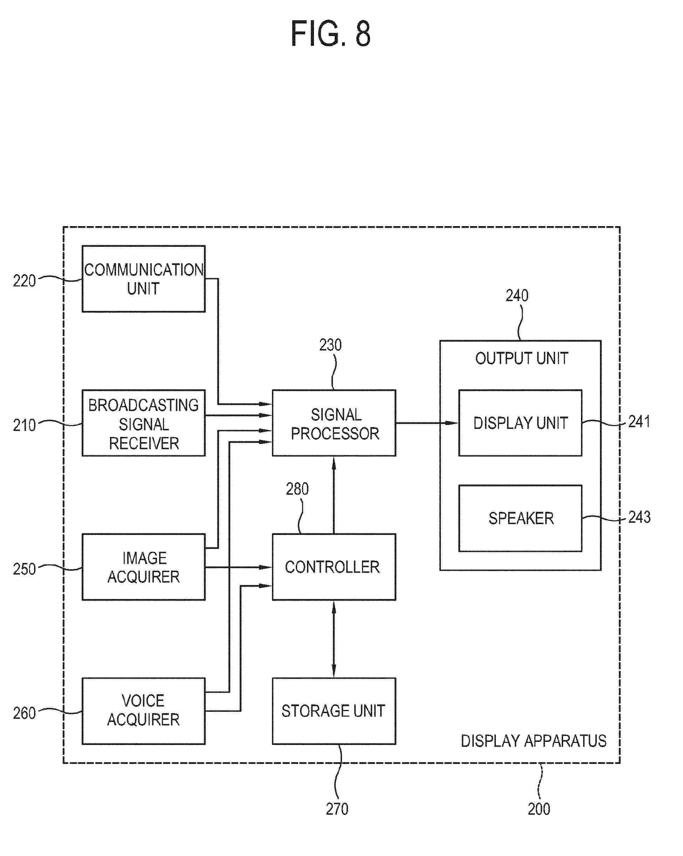

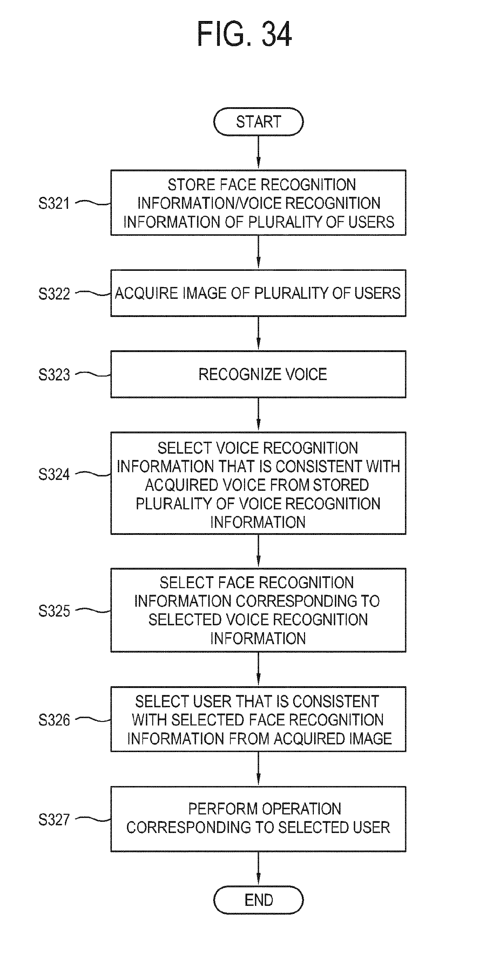

FIG. 34 is a control flowchart of the display apparatus in FIG. 8;

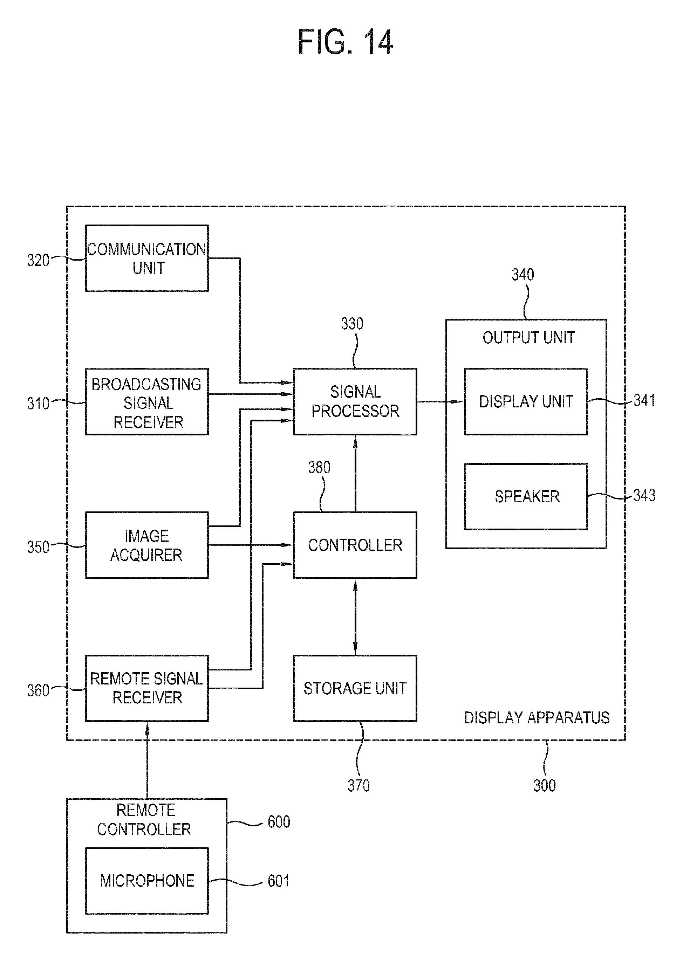

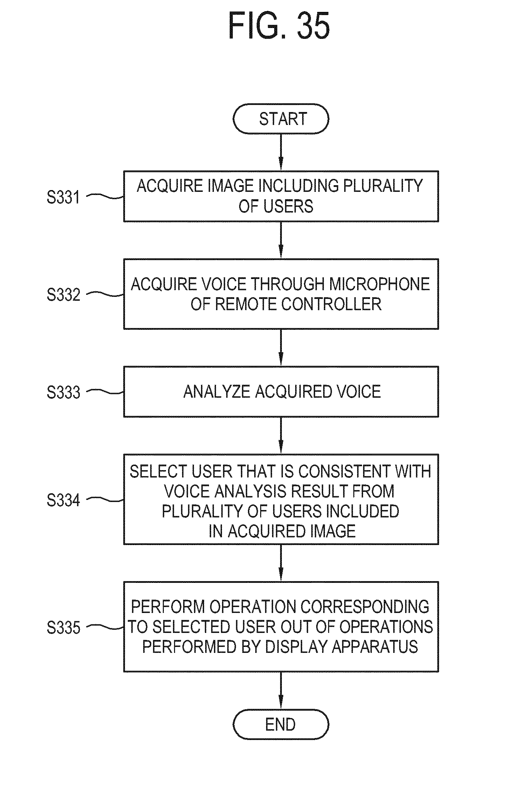

FIG. 35 is a control flowchart of the display apparatus in FIG. 14;

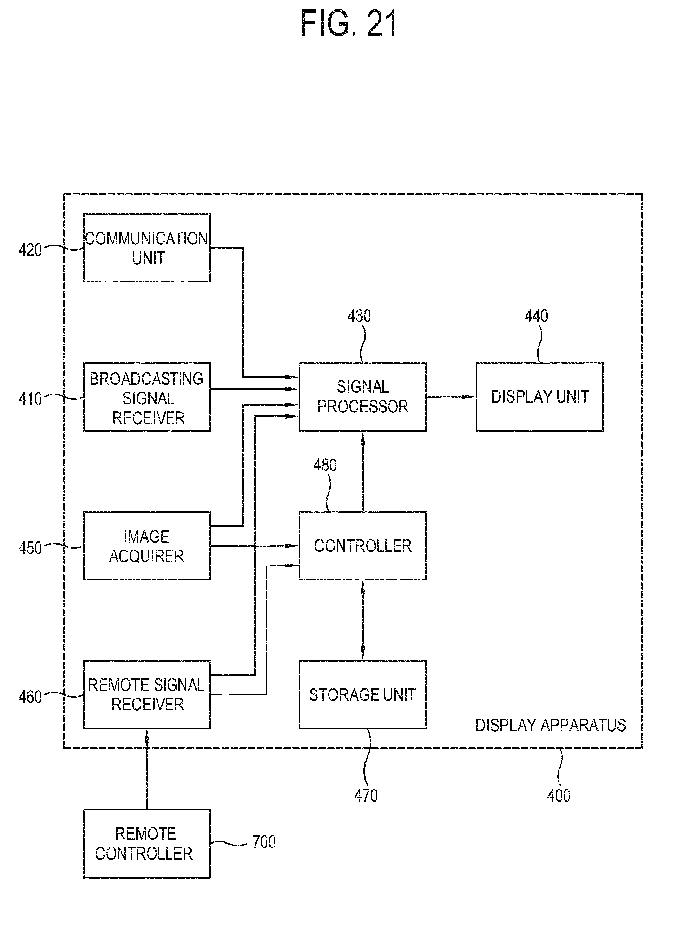

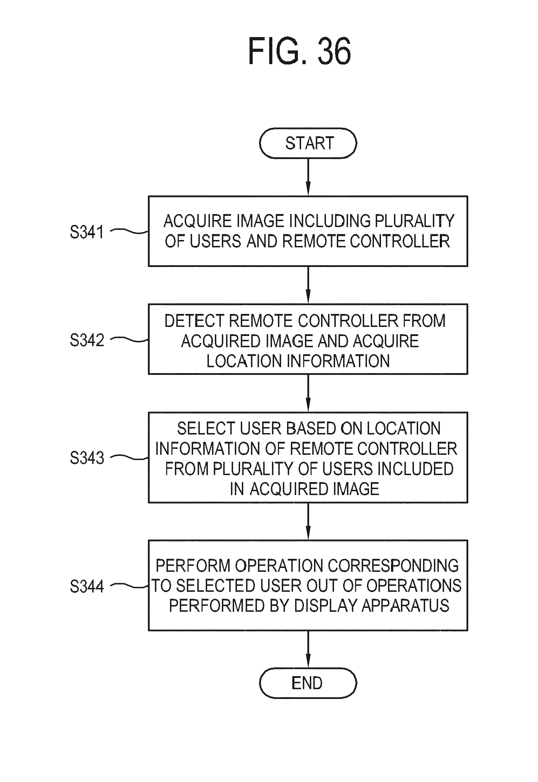

FIG. 36 is a control flowchart of the display apparatus in FIG. 21; and

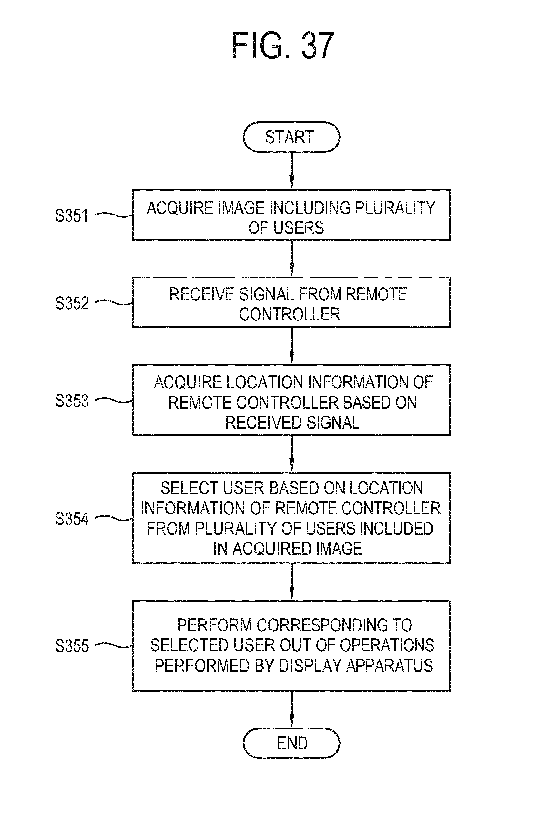

FIG. 37 is another control flowchart of the display apparatus in FIG. 21.

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

FIG. 1 is a control block diagram of a display apparatus according to an exemplary embodiment.

As shown therein, a display apparatus 100 includes a broadcasting signal receiver 110, a communication unit 120 (also referred to as a "communicator"), a signal processor 130, a display unit 140 (also referred to as a "display"), an image acquirer 150, a storage unit 160 (also referred to as a "storage") and a controller 170 which controls the foregoing elements. The display apparatus 100 may be implemented as any type of display apparatus which receives a broadcasting signal in real-time from an external broadcasting signal transmitter (not shown) and communicates with an external server such as a web server through a network. The display apparatus 100 according to the present exemplary embodiment is implemented as a smart TV, which is an interactive device. The smart TV may receive and display a broadcasting signal in real-time, and with its web browsing function, may enable a user to view a broadcasting signal in real-time and at the same time to search and retrieve various contents on the Internet, while providing a convenient user environment. The smart TV includes an open software platform and provides a user with interactive service. Accordingly, the smart TV may provide a user with various contents, e.g., an application providing a predetermined service, through the open software platform. Such an application may provide various types of services, e.g., social networking services (SNS), finance services, news, weather services, maps, music, movies, games, e-books, and video calls.

The smart TV may be used by a plurality of users, and may enable a user to set his/her own account and to log in with the set user's account and use the smart TV. After logging in with his/her own user account, each user may set a display status which is distinct from display statuses of other user accounts. The smart TV may store, for each user's account, a viewing history of a broadcasting program, visit records of a web page, and address books, as metadata.

The broadcasting signal receiver 110 receives a broadcasting signal from an external broadcasting signal transmitter (not shown). For example, the broadcasting signal receiver 110 includes a tuner and receives an analog/digital broadcasting signal transmitted by a broadcasting station, in a wireless/wired manner, e.g, by airwave or cable. The broadcasting signal receiver 110 may vary according to standards of a broadcasting signal and the type of the display apparatus 100. In the case of an analog broadcasting signal, the broadcasting signal receiver 110 may wirelessly receive a broadcasting signal as a radio frequency (RF) signal by airwave or receive a broadcasting signal as a composite/component video signal in a wired manner by cable. The broadcasting signal receiver 110 may receive a digital broadcasting signal according to various standards, such as, for example, the HDMI standard.

The communication unit 120 may communicate with an external server (not shown). The external server includes a web server, and the display apparatus 100 may display a web page transmitted by the web server through a web browser. The external server provides a plurality of applications which each provide a predetermined service, and the display apparatus 100 may download an application program according to a user's selection from an external server through the communication unit 120. The communication unit 120 may communicate with an external server through a wired/wireless network, e.g., a local area network (LAN) or a wireless local area network (WLAN) communication. The communication unit 120 may communicate with an external electronic device which stores contents and which is located in a predetermined network, and may receive contents from the external electronic device. For example, the display apparatus 100 may form a digital living network alliance (DLAN) with an external electronic device that is located in a predetermined space, and receive contents from the external electronic device in the DLAN and display the contents therein.

The signal processor 130 processes a broadcasting signal that is transmitted by the broadcasting signal receiver 110, and controls the processed broadcasting signal to be displayed on the display unit 140. The signal processor 130 further processes various types of contents transmitted by the communication unit 120, and controls the contents to be displayed on the display unit 140. The image processing operation of the signal processor 130 includes, solely or collectively, analog/digital converting, demodulating, decoding, deinterlacing, scaling and detail-enhancing operations, and a frame refresh rate converting operation, depending on a processed image signal. The signal processor may be provided as separate components having individual configurations for performing each image processing operation independently, or as a system-on chip (SoC) having an integrated configuration for integrating several functions.

The display unit 140 displays thereon an image based on a broadcasting signal output by the signal processor 130. The display unit 140 may be implemented as many different types including, for example, a liquid crystal display (LCD), a plasma display panel (PDP), a light emitting diode (LED), an organic light emitting diode (OLED), a surface-conduction electron-emitter, a carbon nano-tube, and a nano-crystal. Additionally, the display unit 140 may display an image acquired by the image acquirer 150.

The image acquirer 150 acquires a user's image and may include a face recognition sensor or a camera which acquires a user's image or video. When the image acquirer 150 includes a camera, the camera may be a 2D or 3D camera. An image or a video which includes at least one user's face that is acquired by the sensor or camera is transmitted to the controller 170. The controller 170 may analyze the image or video acquired by the sensor or camera by using a face recognition algorithm, and generate information indicating the number of users included in the image/video and face recognition information of each user. The controller 170 may recognize a user's gesture by tracking a motion from the image/video acquired by the sensor/camera. This functionality will be described in more detail below when the operation of the controller 170 is described.

The storage unit 160 stores therein face recognition information of a plurality of users analyzed by the controller 170. The storage unit 160 further stores therein metadata corresponding to the stored face recognition information of the plurality of users. The metadata includes, for example, display setting data of the display apparatus 100, viewing history of a broadcasting program, visit records of a web page, an address book, etc. The display setting data includes, for example, data for brightness, contrast, darkness and picture ratio of the display unit 140. The address book includes information to enable a user to contact a desired address through a predetermined application, and may include, for example, telephone numbers/email addresses, etc.

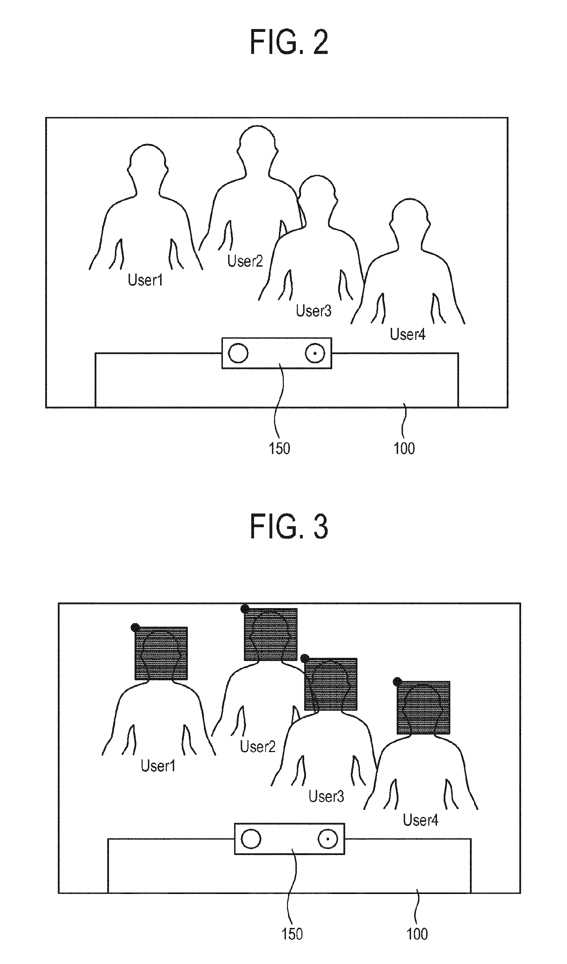

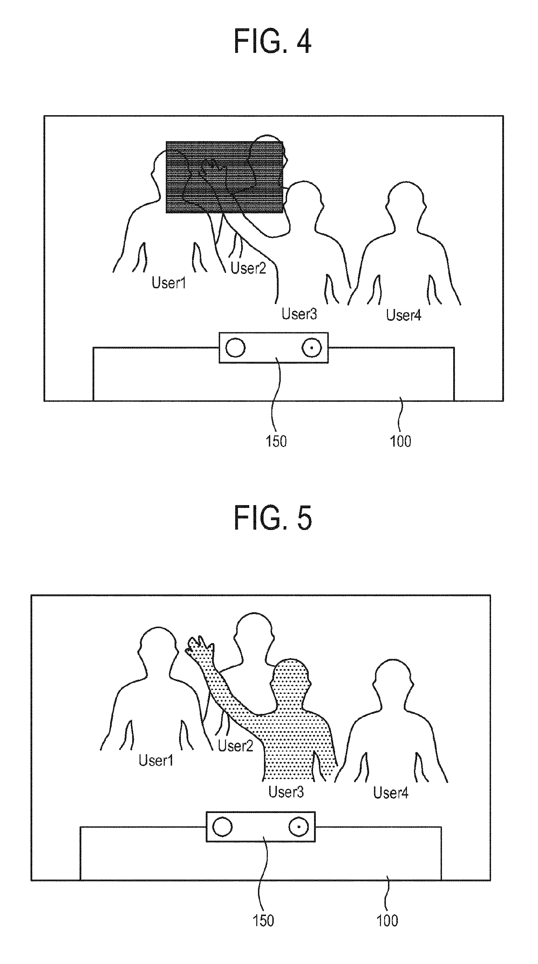

When an image including a plurality of users is acquired by the image acquirer 150 and a predetermined gesture is recognized from the acquired image, the controller 170 selects a user which has made the predetermined gesture among the plurality of users and analyzes face recognition information of the selected user. The controller 170 according to the present embodiment will be described in more detail with reference to FIGS. 2 to 6. FIGS. 2 to 6 illustrate an operation of the controller 170 of the display apparatus 100 according to the present exemplary embodiment. Referring to FIGS. 2 to 6, in FIG. 2, a plurality of users (e.g., users 1 to 4) is located in front of the display apparatus 100. It is understood that the number of users may be more or less than four. The image acquirer 150 acquires and transmits an image to the controller 170 by a control of the controller 170. The controller 170 receives the image acquired by the image acquirer 150 and analyzes the received image. According to an exemplary embodiment, the controller 170 analyzes the received image using a face recognition algorithm which includes a face detection process and a facial feature extraction process. According to this face recognition algorithm, first, the controller 170 determines the number of users included in the received image through a face detection process. The face detection process is performed to identify a facial area from the image acquired by the image acquirer 150. According to an exemplary embodiment, to perform the face detection process, the controller 170 performs a facial normalization process for accurate face recognition, and performs a facial area detection operation and a nose position detection operation for the facial normalization which efficiently normalizes the size and rotation of the facial image on a both eye basis. Accordingly, the controller 170 may determine the number of users included in the image transmitted by the image acquirer 150, through the face detection process (FIG. 3). As shown in FIG. 3, when it is determined that the image acquired by the image acquirer 150 includes a plurality of users (users 1 to 4), the controller 170 recognizes a predetermined gesture by tracing a motion of the received image (FIG. 4). For example, the predetermined gesture may include a gesture including waving, raising a hand, using hand motions to indicate a two-dimensional action (e.g., drawing a circle) or using hand motions to indicate a three-dimensional action (e.g., pushing or pulling an object). Accordingly, the controller 170 selects the user who has made a predetermined gesture when the predetermined gesture is recognized by tracing the motion of the received image (FIG. 5).

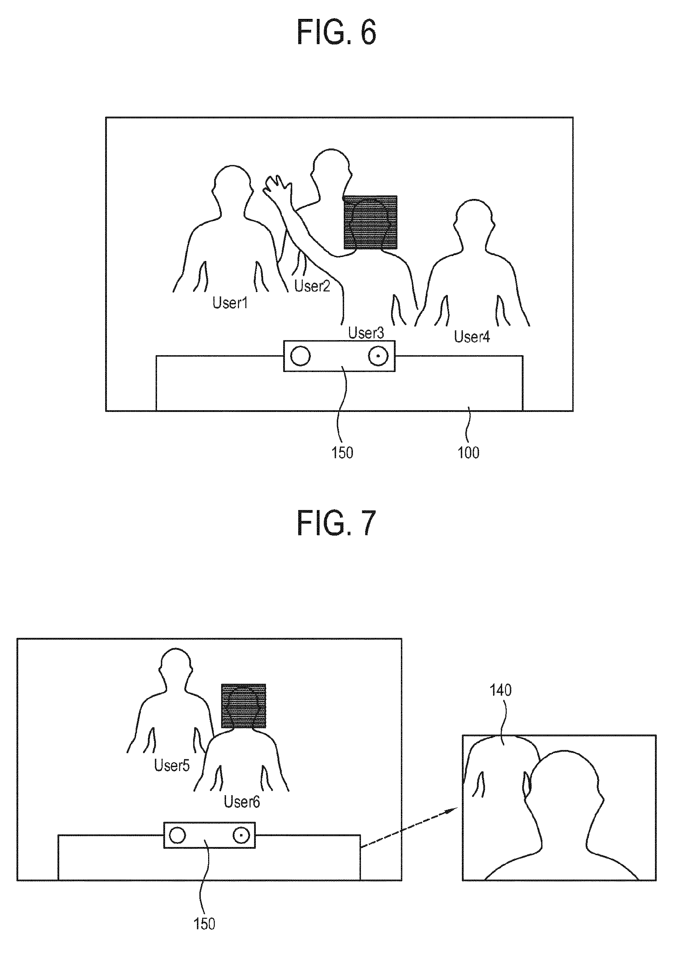

When one of a plurality of users is selected through the gesture recognition process from the image transmitted by the image acquirer 150, the controller 170 generates face recognition information of the user by performing the facial feature extraction process of the face recognition algorithm. According to an exemplary embodiment, thee facial feature extraction process includes extraction of a user's inherent values from the input facial image after a preprocessing operation, such as reducing variation of a pixel value or removing noise from the facial image due to a change in brightness, is performed. Accordingly, the controller 170 performs the facial feature extraction process for the user selected through the gesture recognition process, extracts the inherent values of the facial features of the selected user and generates face recognition information (FIG. 6).

A control operation of the controller 170 as described in FIGS. 2 to 6 (selecting a user from among a plurality of users through the gesture recognition process) may be used in the following exemplary embodiment.

The display apparatus 100 according to the present exemplary embodiment may include a smart TV as described above. Users who use the display apparatus 100 may each set his/her own user ID. When each of the plurality of users inputs a particular key of a user input unit (not shown) to set a user ID, the controller 170 controls the image acquirer 150 to acquire a user's image located in front of the display apparatus 100. When it is determined that there is a plurality of users based on the analysis of the user image by the controller 170, one of the plurality of users may be selected in the manner described in FIGS. 2 to 6 (i.e., selecting a user through the gesture recognition process), face recognition information of the selected user may be generated and the information may be stored as a user ID in the storage unit 160. When a user logs in to and uses the display apparatus 100 with his/her user ID, the controller 170 may further store metadata of the user ID in the storage unit 160.

When (i) face recognition information of the plurality of users is already stored in the storage unit 160, (ii) the plurality of users is located in front of the display apparatus 100 and (iii) one of the plurality of users desires to log in to the display apparatus 100 with his/her user ID and inputs a particular key of the user input unit, the controller 170 controls the image acquirer 150 to acquire an image of the user located in front of the display apparatus 100. When it is determined that there is a plurality of users based on the analysis of the received image, the controller 170 selects one of the plurality of users in the manner described in FIGS. 2 to 6 (i.e., selecting a user through the gesture recognition process), generates face recognition information of the selected user, and compares it with face recognition information of a plurality of users stored in advance in the storage unit 160. When the face recognition information of the selected user is consistent with the face recognition information of a plurality of users stored in the storage unit 160 (e.g., consistent with an entry corresponding to a user included in the face recognition information), the controller 170 performs an automatic log-in process to the display apparatus 100 by using the face recognition information of the selected user. When the face recognition information of the selected user is not consistent with any of the face recognition information of a plurality of users stored in the storage unit 160 (e.g., not consistent with any entries), the controller 170 may store in the storage unit 160 the face recognition information of the selected user as a new user ID.

When the display apparatus 100 according to the present exemplary embodiment includes a smart TV, a video chat application may be installed therein for a plurality of users to perform video chatting. This will be described with reference to FIG. 7. FIG. 7 illustrates another control operation of the controller 170 of the display apparatus 100 in FIG. 1. That is, when a plurality of users (users 5 and 6) is located in front of the display apparatus 100 and a user desires to enlarge and display a face of one of the users while chatting (e.g., user 6 desires to enlarge his/her own face), the user inputs a particular key of the user input unit, and the controller 170 selects one of the plurality of users in the manner described in FIGS. 2 to 6, and controls the image acquirer 150 to perform a zoom-in function to zoom in the user. It is understood that many types of operations other than a zoom-in function may be performed according to other exemplary embodiments.

FIG. 8 is a control block diagram of a display apparatus 200 according to another exemplary embodiment. The display apparatus 200 in FIG. 8 includes a broadcasting signal receiver 210, a communication unit 220, a signal processor 230, an output unit 240 (also referred to as an "outputter"), an image acquirer 250, a voice acquirer 260, a storage unit 270 and a controller 280 which controls the foregoing elements.

The display apparatus 200 in FIG. 8 is similar to the display apparatus 100 in FIG. 1, but there are differences between the configurations of the display apparatuses 100 and 200, including that the display apparatus 200 includes the output unit 240, the voice acquirer 260, the storage unit 270 and the controller 280. Thus, as the broadcasting signal receiver 210, the communication unit 220, the signal processor 230 and the image acquirer 250 are generally similar in function to those corresponding elements of the display apparatus 100 in FIG. 1, detailed descriptions thereof will be omitted.

The signal processor 230 of the display apparatus 200 according to the present exemplary embodiment has substantially similar functions as the signal processor 130 of the display apparatus 100 in FIG. 1. In addition, the signal processor 230 according to the present exemplary embodiment may further process an audio signal included in a broadcasting signal that is received by the broadcasting signal receiver 210. The signal processor 230 may include an A/D converter (not shown) to convert an analog audio signal received by the broadcasting signal receiver 210 into a digital audio signal; an audio amplifier (not shown) to amplify the received voice signal; a level adjuster (not shown) to adjust an output level of the audio signal; and/or a frequency adjuster (not shown) to adjust a frequency of the audio signal. The audio signal which is processed by the signal processor 230 is transmitted to the output unit 240.

The output unit 240 includes a display unit 241 and a speaker 243. As the display unit 241 may be implemented to be the same as or substantially similar to the display unit 140 of the display apparatus 100 in FIG. 1, a detailed description will be omitted.

The speaker 243 outputs audio corresponding to an audio signal processed by the signal processor 230. The speaker 243 vibrates air, and forms and outputs a sound wave with respect to the received audio signal by using a vibration panel provided therein. The speaker 243 may further include a woofer speaker (not shown). According to an exemplary embodiment, the speaker 243 may output audio corresponding to audio signals input to the voice acquirer 260. The voice acquirer 260 acquires a user's voice and may include a microphone. According to an exemplary embodiment, the term "voice" may refer, for example, to a voice command. The voice acquirer 260 transmits the acquired voice to the controller 280, which generates a user's voice recognition information from the received voice. This will be described in more detail later in connection with the controller 280.

The storage unit 270 stores therein face recognition information of each of a plurality of users and voice recognition information corresponding thereto. The storage unit 270 stores therein metadata corresponding to the stored face recognition information of the plurality of users. The metadata may include various types of information, for example, display setting data of the display apparatus 100, viewing history of a broadcasting program, visit records of a web page and an address book. According to an exemplary embodiment, the display setting data includes data for brightness, contrast, darkness, picture ratio, etc. of the display unit 241. The address book includes information to enable a user to contact a desired address through a predetermined application, and may include, for example, telephone numbers/email addresses, etc.

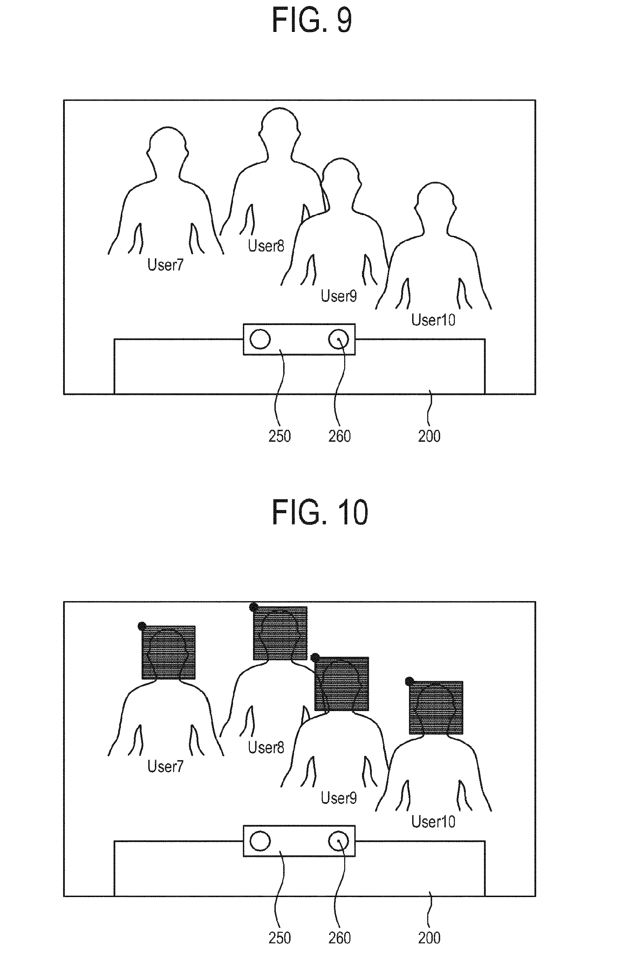

When an image including a plurality of users is acquired by the image acquirer 250 and a voice is acquired by the voice acquirer 260, the controller 280 analyzes the acquired voice, selects voice recognition information that is consistent with the analyzed voice recognition information from among the stored voice recognition information of a plurality of users, selects face recognition information corresponding to the selected voice recognition information from among the stored face recognition information, analyzes the face recognition information of a plurality of users included in the acquired image and selects the analyzed face recognition information that is consistent with the selected face recognition information corresponding to the selected voice recognition information. This will be described in more detail with reference to FIGS. 9 to 13. FIGS. 9 to 13 illustrate an operation of the controller 280 of the display apparatus 200 in FIG. 8. Referring to FIGS. 9 to 13, in FIG. 9, a plurality of users (users 7 to 10) is located in front of the display apparatus 200 according to the present exemplary embodiment. The image acquirer 250 acquires and transmits an image to the controller 280 by a control of the controller 280. The controller 280 receives the image acquired by the image acquirer 250 and analyzes the received image. The controller 280 first determines the number of users included in the received image through the face detection process of the face recognition algorithm. In this exemplary embodiment, the controller 280 determines that four users (users 7 to 10) are included in the received image (FIG. 10), although it is understood that more or less than four users may be included in the received image. The face detection process is the same as or substantially similar to the face detection process described in FIGS. 2 to 6, and a detailed description thereof will be omitted.

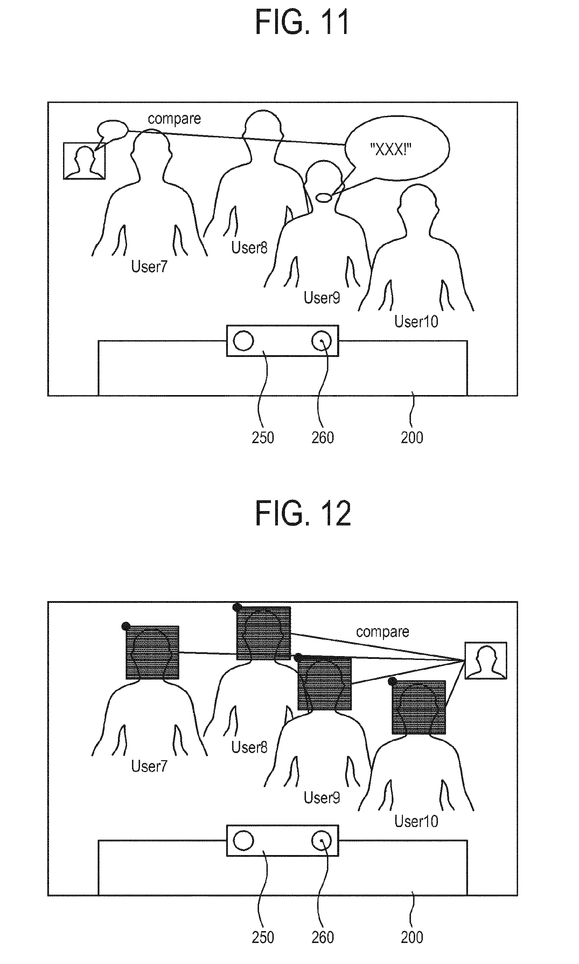

When the voice acquirer 260 acquires a voice, the controller 280 analyzes the acquired voice. According to an exemplary embodiment, the term "voice" may refer to a voice command spoken by a user. The controller 280 may analyze the received voice by using various types of technology, such as, for example, acoustic echo cancellation (ACE), noise suppression (NS), sound source localization, automatic gain control (AGC) and beamforming. When the image acquired by the image acquirer 250 includes the plurality of users (users 7 to 10) and a voice of a particular user (e.g., user 7) is received through the voice acquirer 260, the controller 280 recognizes the voice (FIG. 11). For example, the voice may be a preset voice command including a particular spoken term, such as a preset number, word or sentence. Accordingly, when the voice is received through the voice acquirer 260, the controller 280 analyzes the voice and recognizes that the received voice is the preset voice command (FIG. 11).

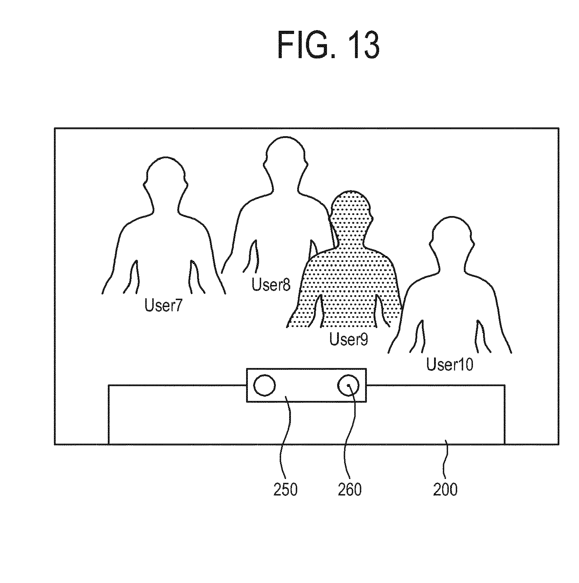

The controller 280 analyzes the preset voice command, generates the voice recognition information in FIG. 11 by using voice analysis technology, and compares the generated voice recognition information with the voice recognition information stored in the storage unit 270 (e.g., a plurality of entries of the voice recognition information stored in the storage unit 270). The storage unit 270 stores therein voice recognition information for each of the users 7 to 10 and face recognition information corresponding thereto. When the generated voice recognition information is consistent with any of the plurality of entries of voice recognition information stored in the storage unit 270, the controller 280 extracts face recognition information corresponding to the voice recognition information. The controller 280 performs the facial feature extraction process of the plurality of users included in the image acquired by the image acquirer 250 (users 7 to 10), generates face recognition information of each user, and compares the generated face recognition information with the face recognition information extracted from the storage unit 270 (FIG. 12). The controller 280 selects one entry from among the analyzed face recognition information that is consistent with the face recognition information extracted from the storage unit 270 to thereby select one of the plurality of users (FIG. 13). Accordingly, when a voice (e.g., preset voice command) with respect to a user (e.g., user 9) of the plurality of users is recognized, the controller 280 generates voice recognition information of the user (e.g., user 9), compares the generated voice recognition information with the plurality of entries of voice recognition information stored in the storage unit 270, selects the stored voice recognition information which is consistent with the generated voice recognition information, and extracts the stored voice recognition information. Then, the controller 280 generates the face recognition information of users 7 to 10 and compares the generated face recognition information of users 7 to 10 with the face recognition information extracted from the storage unit 270, and selects the generated face recognition information from among the generated face recognition information of users 7 to 10 that is consistent with the face recognition information extracted from the storage unit 270 to thereby select one of a plurality of users (e.g., user 9).

Conventional voice recognition may be used to analyze voice location information of a speaker and select one of a plurality of users who has spoken the voice. However, such user location identification based on the voice location information that is performed through the voice analysis is not faster than selection of one of a plurality of users through face recognition information. Accordingly, the display apparatus 200 according to the present exemplary embodiment uses both the voice recognition information and face recognition information to thereby select a user at near real-time speeds.

Similarly to the exemplary embodiment of the display apparatus 100 in FIGS. 2 to 6, the display apparatus 200 in FIG. 8 may be used to select one of a plurality of users located in front of the display apparatus 200 to set a user's ID, used to select one of a plurality of users for logging into the display apparatus 200, and used to zoom in and display a face of one of a plurality of users during video chat.

FIG. 14 is a control block diagram of a display apparatus 300 according to another embodiment. The display apparatus 300 in FIG. 14 includes a broadcasting signal receiver 310, a communication unit 320, a signal processor 330, an output unit 340, an image acquirer 350, a remote signal receiver 360, a storage unit 370 and a controller 380 which controls the foregoing elements.

The display apparatus 300 in FIG. 13 is substantially similar to the display apparatus 200 in FIG. 8 except for the differences that the display apparatus 300 has a configuration including the remote signal receiver 360 receives a signal of a remote controller 600 and the controller 380. Accordingly, the broadcasting signal receiver 310, the communication unit 320, the signal processor 330, the output unit 340, the image acquirer 350, and the storage unit 370 are similar in functionality to those corresponding elements of the display apparatus 200 in FIG. 8, and a detailed description thereof will be omitted.

The remote controller 600 is used to input a control signal from a remote place to control the display apparatus 300, and may further include a microphone 601 to acquire a user's voice. Upon input of a user's voice through the microphone 601 of the remote controller 600, the remote signal receiver 360 receives the user's voice from a remote place. The remote signal receiver 360 transmits the input voice to the controller 380, and the controller 380 generates voice recognition information of a user from the received voice. This will be described in more detail in connection with the controller 380.

When the image acquirer 350 acquires an image including a plurality of users and the remote signal receiver 360 receives a voice, the controller 380 analyzes the acquired voice. The analysis of the voice may be performed in the same manner as described above with respect to FIG. 11 and may be used to determine various characteristics of a user, e.g., may be performed to identify gender or age or a user. When user information such as a user's gender or age is identified through the analysis of voice, the controller 380 analyzes a user's location that is consistent with the analyzed voice from the acquired image including the plurality of users. For example, when a user's gender or age is identified through the analysis of the voice, the controller 380 identifies gender and age of the plurality of users included in the acquired image, by using a face recognition algorithm, and selects a user's location that is consistent with the user's gender and age obtained through the analysis of the voice. Then, the controller 380 performs face recognition of a user that is located in the selected location.

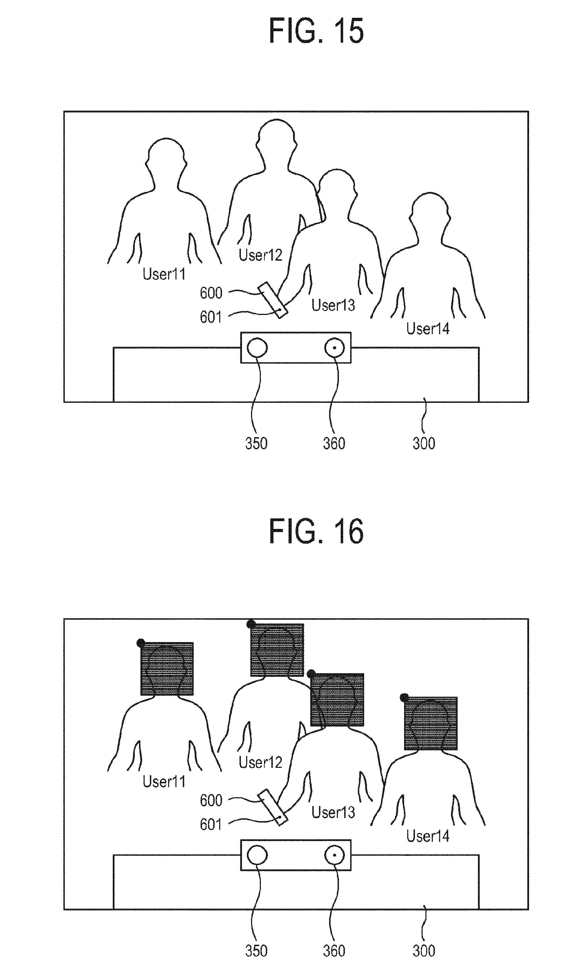

This will be described in more detail with reference to FIGS. 15 to 20. FIGS. 15 to 20 illustrate an operation of the controller 380 of the display apparatus 300 in FIG. 14. Referring to FIGS. 15 to 20, a plurality of users (users 11 to 14) is located in front of the display apparatus 300 according to the present exemplary embodiment as shown in FIG. 15, and the image acquirer 350 acquires an image and transmits the image to the controller 380 by a control of the controller 380. The controller 380 receives the image acquired by the image acquirer 350 and analyzes the received image. The controller 380 determines the number of users included in the received image, by using a face recognition algorithm, and identifies that there are, for example, four users (users 11 to 14) (FIG. 16). According to an exemplary embodiment, the face detection process is the same as or substantially similar to the process described above in connection with FIGS. 2 to 5, and a detailed description thereof will be omitted.

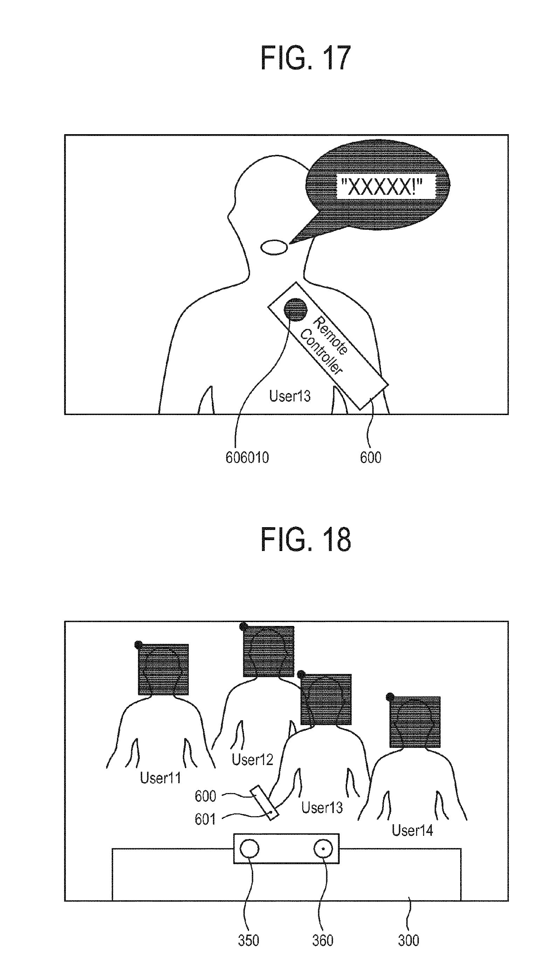

When the remote signal receiver 360 receives a voice that has been input to the microphone 601 of the remote controller 600, the controller 380 analyzes the acquired voice. According to an exemplary embodiment, the analysis technology is the same as that described above with respect to FIG. 11. When it is determined that a plurality of users (users 11 to 14) is included in the image acquired by the image acquirer 350 as shown in FIG. 16 and a voice of a user (e.g., user 13) is received through the remote signal receiver 360, the controller 380 analyzes the voice and identifies a gender or age of the voice input to the microphone 601 of the remote controller 600 (FIG. 17). It is understood that information other than gender or age may also be used according to other exemplary embodiments.

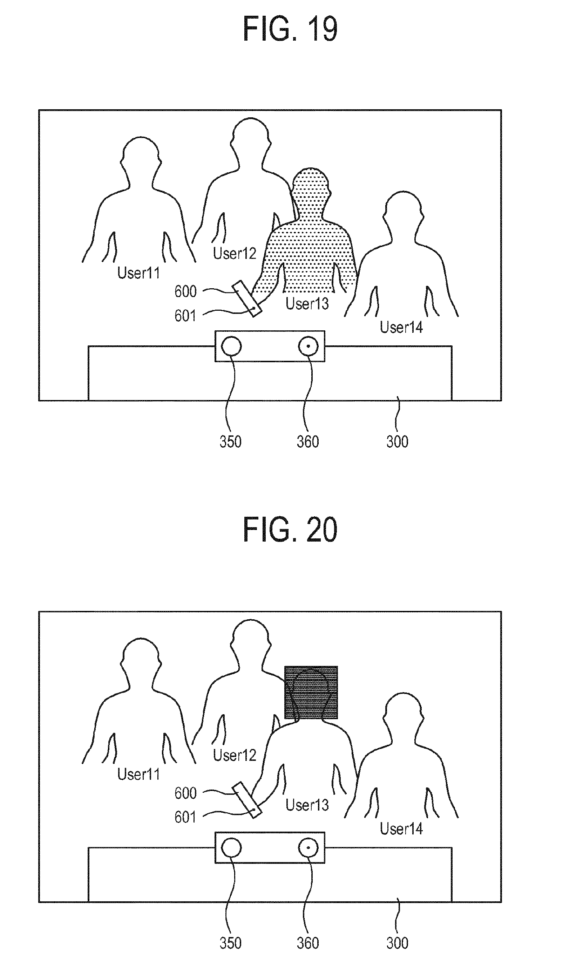

When user information such as gender or age of a user is identified through the analysis of the voice, the controller 380 identifies a user's location that is consistent with the voice analysis result from the acquired image including the plurality of users (FIG. 18). For example, when it is determined that a user is a male adult, the controller 380 identifies a location of the male adult from the plurality of users included in the acquired image. When the location of the male adult is identified as corresponding to a particular user (e.g., user 13), the controller selects the user (e.g., user 13) as a user holding the remote controller 600 (FIG. 19). Then, the controller 380 performs a face recognition operation of a user located in the selected location (FIG. 20).

As described above, the controller 380 may identify information such as a user's age or gender through the analysis of the user's voice input through the microphone 601 of the remote controller 600 and select the user's location corresponding to the voice analysis result to thereby select one of a plurality of users (e.g., user 13).

Similarly to the embodiment of the display apparatus 100 in FIGS. 2 to 6, the display apparatus 300 shown in FIG. 14 may be used to select one of a plurality of users for setting an ID of the one of the plurality of users, used for selecting one of a plurality of users for logging into the display apparatus 100 and used for zooming in and displaying a face of one of a plurality of users during a video chat, when a plurality of users is located in front of the display apparatus 300.

FIG. 21 is a control block diagram of a display apparatus 400 according to another embodiment. The display apparatus 400 shown in FIG. 21 includes a broadcasting signal receiver 410, a communication unit 420, a signal processor 430, a display unit 440, an image acquirer 450, a remote signal receiver 460, a storage unit 470 and a controller 480 which controls the foregoing elements.

The display apparatus 400 in FIG. 21 is substantially similar to the display apparatus 200 in FIG. 8 except for the differences that the display apparatus 400 has the configuration including the remote signal receiver 460 which receives a signal of a remote controller 700 and the controller 480. Accordingly, the broadcasting signal receiver 410, the communication unit 420, the signal processor 430, the display unit 440, the image acquirer 450, and the storage unit 470 are similar in functionality to those corresponding elements of the display apparatus 200 shown in FIG. 8, and a detailed description thereof will be omitted.

According to the present exemplary embodiment, the remote controller 700 which is used to input a control signal from a remote place to control the display apparatus 400 has a certain shape or color. The remote signal receiver 460 remotely receives a control signal from the remote controller 700 to control the display apparatus 400.

When the image acquirer 450 acquires an image including a plurality of users and the remote controller 700, the controller 480 analyzes the acquired image, detects the remote controller 700 and identifies the location information. The controller 480 selects a user through the identified location information of the remote controller 700. To easily detect the remote controller 700 from the acquired image, according to an exemplary embodiment, the remote controller 700 has a particular shape or color. When the remote controller 700 is detected from the acquired image and the location information is identified, the controller 480 selects a user from the plurality of users based on the location information of the remote controller 700. Taking into account various considerations, such as, for example, the location of a user's arm, a user's profile, posture, and a distance between the user and the remote controller 700, an optimum user may be selected.

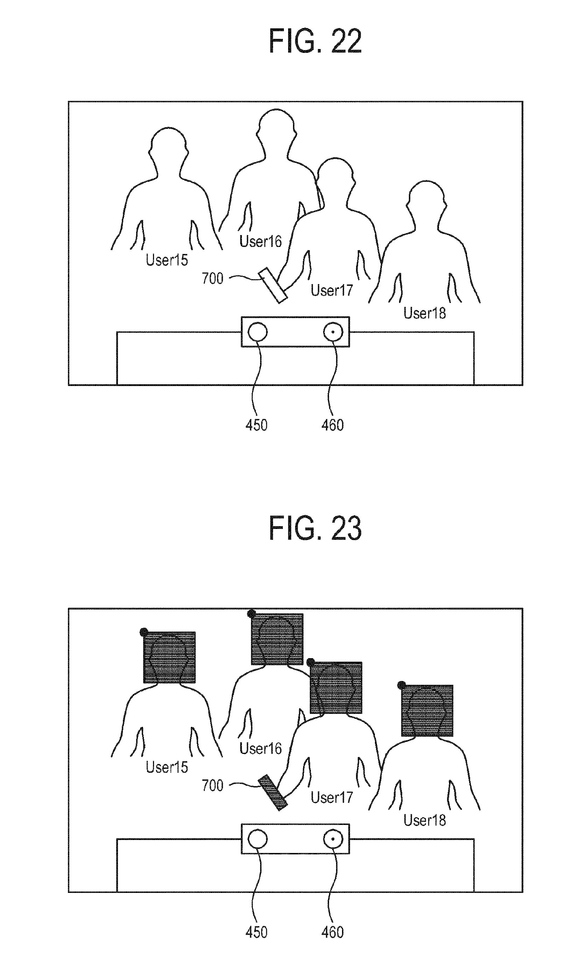

This will be described in more detail with reference to FIGS. 22 to 26. FIGS. 22 to 26 illustrate an operation of the controller 480 of the display apparatus 400 in FIG. 21. Referring to FIGS. 22 to 26, a plurality of users (users 15 to 18) is located in front of the display apparatus 400 according to the present embodiment as shown in FIG. 22, and the image acquirer 450 acquires an image and transmits the image to the controller 480 by a control of the controller 480. The controller 480 receives the image acquired by the image acquirer 450, and analyzes the received image. The controller 480 determines the number of users included in the received image, by using a face recognition algorithm, and identifies that there are four users (users 15 to 18) (FIG. 23). The face detection process is the same as or substantially similar to the process described in FIGS. 2 to 6, and a detailed description thereof will be omitted. It is understood that the number of users may be more or less than four users.

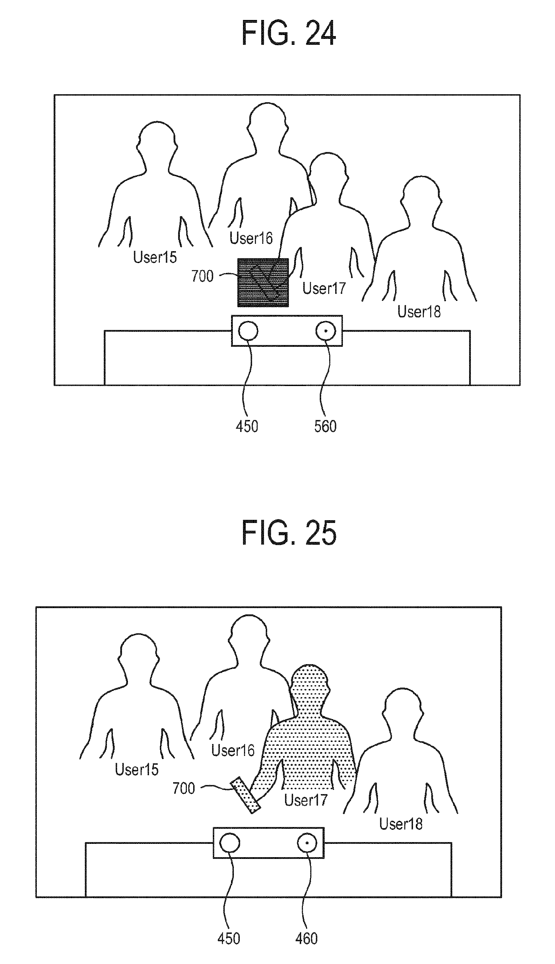

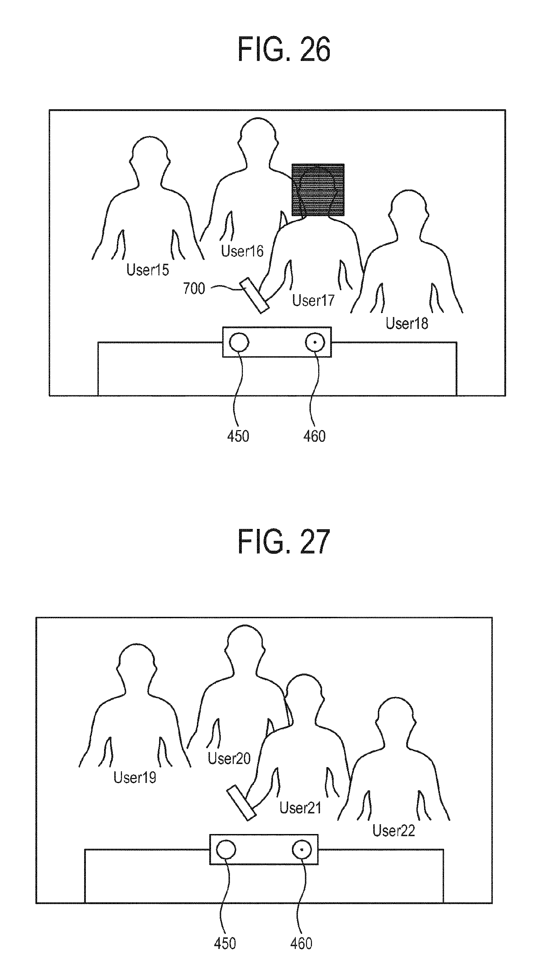

Similarly to the face recognition algorithm, the controller 480 identifies the location information of the remote controller 700 included in the received image (FIG. 24). According to an exemplary embodiment, to easily detect the remote controller 700 from the acquired image, the remote controller 700 has a particular shape and/or color. Thus, the remote controller 700 having such shape, color or a combination thereof may be detected. When the remote controller 700 is detected from the acquired image and the location information is identified, the controller 480 selects a user (e.g., user 17) from the plurality of users based on the location information of the remote controller 700 (FIG. 25). Taking into account various considerations, such as, for example, the location of a user's arm, a user's profile, posture, and a distance between the user and the remote controller 700 based on the detected location of the remote controller 700, an optimum user may be selected from the plurality of users. Then, the controller 480 performs a face recognition of a user located in the selected location (FIG. 26).

As described above, the controller 480 may identify the location information of the remote controller 700 and selects the user's location corresponding to the location information to thereby select one of a plurality of users (e.g., user 17).

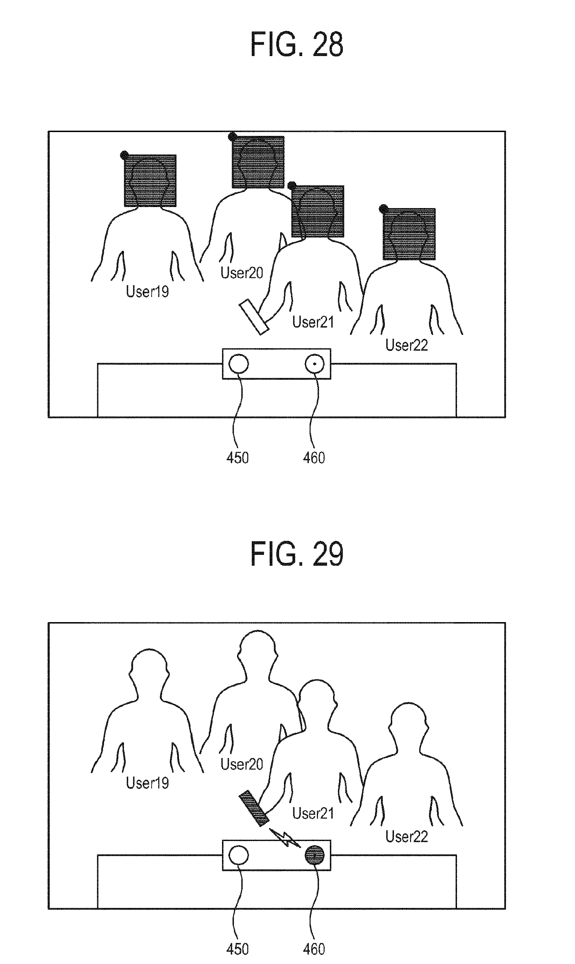

FIGS. 27 to 31 illustrate another operation of the controller 480 of the display apparatus 400 in FIG. 21. Referring to FIGS. 27 to 31, a plurality of users (users 19 to 22) is located in front of the display apparatus 400 according to the present exemplary embodiment as shown in FIG. 27, and the image acquirer 450 acquires an image and transmits the image to the controller 480 by a control of the controller 480. The controller 480 receives the image acquired by the image acquirer 450, and analyzes the received image. The controller 480 determines the number of users included in the received image, by using a face recognition algorithm, and identifies that there are four users (users 19 to 22) (FIG. 28). The face detection process is the same as or substantially similar to the process described in FIGS. 2 to 6, and a detailed description thereof will be omitted. It is understood that the number of users may be more or less than four users.

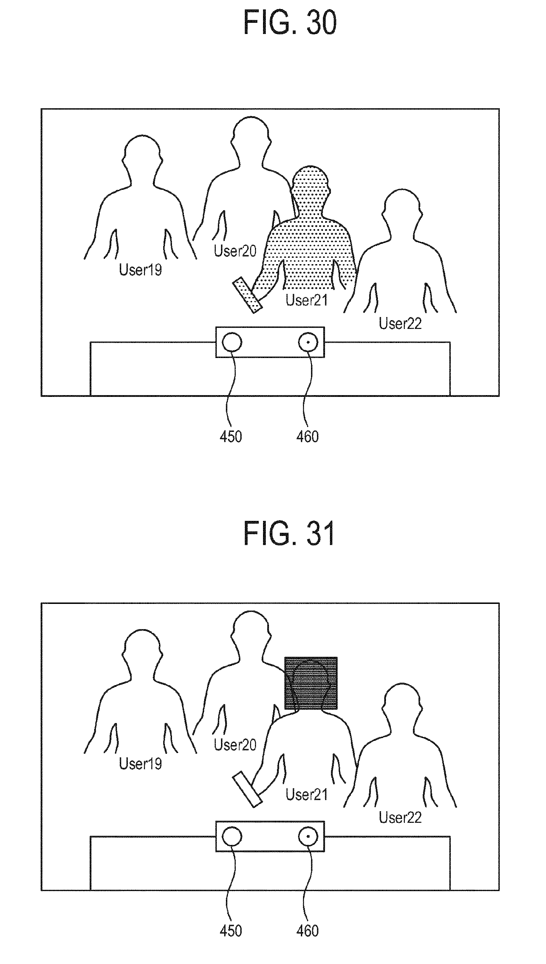

The controller 480 receives a signal including location information of the remote controller 700 from the remote controller 700 through the remote signal receiver 460, and identifies location information of the remote controller 700 (FIG. 29). According to an exemplary embodiment, the remote controller 700 may emit infrared rays and the remote signal receiver 460 includes a plurality of infrared receivers may receive infrared rays from the remote controller 700. When the location information of the remote controller 700 is identified by a signal of the remote controller 700 received through the remote signal receiver 460, the controller 480 selects a user (e.g., user 21) from the plurality of users based on the location information of the remote controller 700 (FIG. 30). The location information of the remote controller 700 may be, for example, a coordinate value or coordinate values which may correspond to the acquired image including the plurality of users and may be used to determine a location of the remote controller 700 corresponding to the coordinate value of the remote controller 700 in the image coordinate. Taking into account various considerations, for example, a location of a user's arm, a user's profile, posture, and a distance between the user and the remote controller 700 based on the determined location of the remote controller 700, an optimum user may be selected. Then, the controller 480 performs a face recognition of a user located in the selected location (FIG. 31).

As described above, the controller 480 may identify the location information of the remote controller and select a user's location corresponding to the location information to thereby select one of a plurality of users (e.g., user 21).

Similarly to the exemplary embodiment of the display apparatus 100 in FIGS. 2 to 6, the display apparatus 400 in FIG. 21 may be used to select one of a plurality of users for setting a user's ID, used to select one of a plurality of users for logging into the display apparatus 400, and used for zooming in and displaying a face of one of a plurality of users during a video chat, when the plurality of users is located in front of the display apparatus 400.

FIGS. 32 and 33 are control flowcharts of the display apparatus 100 in FIG. 1.

As shown in FIG. 32, a control method of the display apparatus 100 in FIG. 1 for selecting one of the plurality of users includes an operation of acquiring an image including a plurality of users (operation 301); an operation of recognizing a predetermined gesture from the acquired image (operation 302); an operation of selecting the user who has made the predetermined gesture among the plurality of users (operation 303); and an operation of performing an operation corresponding to the selected user out of the operations which may be performed by the display apparatus 100 (operation 304).

The method of selecting one of the plurality of users in FIG. 32 may be embodied, for example, in the manner in FIG. 33 according to another exemplary embodiment.

As shown in FIG. 33, a control operation includes an operation of storing face recognition information of a plurality of users (operation S311); an operation of acquiring an image including the plurality of users (operation S312); an operation of recognizing a predetermined gesture from the acquired image (operation S313); an operation of selecting the user who has made such a predetermined gesture among the plurality of users (operation S314); an operation of analyzing face recognition information of the selected user (operation S315); an operation of comparing the analyzed face recognition information with the stored face recognition information of a plurality of users (operation S316); an operation of logging-in with the analyzed face recognition information when the analyzed face recognition information is consistent with any entries of the stored face recognition information (operation S317); an operation of storing the analyzed face recognition information when the analyzed face recognition information is not consistent with any entries of the stored face recognition information (operation S318); and an operation of storing metadata corresponding to the logged-in face recognition information or storing metadata corresponding to the newly stored face recognition information (operation S319).

The method in FIG. 32 may be used for many different purposes, including, for example, to zoom in and display one of a plurality of users on the display unit 140 when a vide chat is to be performed by the display apparatus 100.

FIG. 34 is a control flowchart of the display apparatus 200 in FIG. 8. As shown therein, the control method of the display apparatus 200 in FIG. 8 for selecting one of the plurality of users by using the voice and face recognition information includes an operation of storing face recognition information and voice recognition information of each of a plurality of users (operation S321); an operation of acquiring an image including a plurality of users (operation S322); an operation of analyzing the acquired voice (operation S323); an operation of selecting voice recognition information among the stored plurality of voice recognition information that is consistent with the acquired voice (operation S324); an operation of selecting the face recognition information among the stored face recognition information that corresponds to the selected voice recognition information (operation S325); an operation of selecting a user who is consistent with the selected face recognition information out of the plurality of users included in the acquired image (operation S326); and an operation of performing an operation corresponding to the selected user out of the operations which may be performed by the display apparatus 200 (operation S327).

The method of selecting one of the plurality of users shown in FIG. 34 may be used for many different purposes, for example, when a user ID for one of the plurality of users of the display apparatus 200 is set; when one of a plurality of users logs in with his/her own user ID; or when one of the plurality of users is zoomed in and displayed on the display unit 241 for video chat.

FIG. 35 is a control flowchart of the display apparatus 300 in FIG. 14.

As shown therein, a control method for selecting one of a plurality of users by the display apparatus 300 in FIG. 14 includes an operation of acquiring an image including a plurality of users (operation S331); an operation of acquiring a voice input through a microphone of the remote controller (operation S332); an operation of analyzing the acquired voice (operation S333); an operation of selecting a user who is consistent with the voice analysis result out of the plurality of users included in the acquired image (operation S334); and an operation of performing an operation corresponding to the selected user out of the operations that may be performed by the display apparatus 300 (operation S335).

The method for selecting one of the plurality of users in FIG. 35 may be used for many different purposes, including, for example, when a user ID is to be set for one of the plurality of users of the display apparatus 300, or when one of the plurality of users intends to log into the display apparatus 300 through his/her user ID, or when one of the plurality of users is zoomed in and displayed on the display unit 241 during a video chat.

FIG. 36 is a control flowchart of the display apparatus 400 in FIG. 21.

As shown therein, a control method for selecting one of a plurality of users by the display apparatus 400 in FIG. 21 includes an operation of acquiring an image including a plurality of users and the remote controller (operation S341); an operation of acquiring location information by detecting the remote controller from the acquired image (operation S342); an operation of selecting a user based on the location information of the remote controller from the plurality of users included in the acquired image (operation S343); and an operation of performing an operation corresponding to the selected user out of the operations that may be performed by the display apparatus 400 (operation S344).

The method for selecting one of the plurality of users in FIG. 36 may be used for many different purposes, including, for example, when a user ID is to be set for one of the plurality of users of the display apparatus 400, or when one of the plurality of users intends to log into the display apparatus 400 through his/her user ID, or when one of the plurality of users is zoomed in and displayed on the display unit 241 during a video chat.

FIG. 37 is another control flowchart of the display apparatus 400 in FIG. 21.

As shown therein, another control method for selecting one of a plurality of users by the display apparatus 400 in FIG. 21 includes an operation of acquiring an image including a plurality of users (operation S351); an operation of receiving a signal from the remote controller (operation S352); an operation of acquiring location information of the remote controller based on the received signal (operation S353); an operation of selecting a user based on the location information of the remote controller from the plurality of users included in the acquired image (operation S354); and an operation of performing an operation corresponding to the selected user out of the operations that may be performed by the display apparatus 400 (operation S355).

The method for selecting one of the plurality of users in FIG. 37 may be used for many different purposes, including, for example, when a user ID is to be set for one of the plurality of users of the display apparatus 400, or when one of the plurality of users intends to log into the display apparatus 400 through his/her user ID, or when one of the plurality of users is zoomed in and displayed on the display unit 241 during a video chat.

The control method of the display apparatuses 100, 200, 300 and 400 according to the exemplary embodiments described above may be implemented as a program command to be executed by various computer processing devices/modules and recorded in a storage medium that is read by a computer. The computer-readable storage medium may include, solely or collectively, a program command, a data file and a data configuration. The program command that is recorded in the storage medium may be specially designed and configured for the exemplary embodiments, or may be known and available to those skilled in the art of computer software. The computer-readable record medium may include a magnetic medium, such as a hard disk, floppy disk and magnetic tape, an optical medium such as an optical disk, and a hardware device which is specially configured to store and execute a program command such as ROM, RAM and flash memory. The program command may include not only machine language code that is generated by a compiler but also an advanced language code that is executed by a computer by using an interpreter. The hardware device may be configured to operate as at least one software module for performing the operation according to the exemplary embodiments, and vice versa.

As described above, a display apparatus and a control method thereof according to the exemplary embodiments may select and recognize one of a plurality of users in an image by a user's selection.

Although a few exemplary embodiments have been shown and described, it will be appreciated by those skilled in the art that changes may be made in these exemplary embodiments without departing from the principles of the invention, which is defined in the appended claims.

## Claims

1. A display apparatus comprising:
an image acquirer which acquires an image;
a display unit which displays thereon the image acquired by the image acquirer; and
a controller which selects a user making a predetermined gesture among a plurality of users comprised in an image and controls the display apparatus to perform an operation corresponding to the selected user.

2. The display apparatus according to claim 1, wherein the gesture comprises at least one of setting an ID, logging in and zooming in and displaying the selected user.

3. The display apparatus according to claim 1 or 2, further comprising a storage unit which stores therein face recognition information of a plurality of users, wherein the controller analyzes face recognition information of the selected user, compares the analyzed face recognition information with the stored face recognition information of the plurality of users, and if the analyzed face recognition information is consistent with the stored face recognition information, performs an a corresponding operation corresponding to by selecting the selected consistent user out of the operations which are capable of being performed by the display apparatus if the image comprising the plurality of users is acquired through the image acquirer and the predetermined gesture is recognized from the acquired image.

4. The display apparatus according to claim 3, wherein the controller analyzes the face recognition information of the selected user, compares the analyzed face recognition information with the stored face recognition information of the plurality of users and if there is not consistent face recognition information, controls the storage unit to store the face recognition information of the selected user.

5. The display apparatus according to claim 3, wherein the controller controls the storage unit to store therein metadata corresponding to the stored face recognition information of a plurality of users.

6. The display apparatus according to claim 5, wherein the metadata comprise at least one of display setting data, address book, visit records and viewing history of the display apparatus.

7. The display apparatus according to any one of the preceding claims, further comprising a broadcasting signal receiver which receives a broadcasting signal and a signal processor which processes the received broadcasting signal.

8. The display apparatus according to any one of the preceding claims, further comprising a communication unit which communicates with an external web server.

9. A control method of a display apparatus comprising:
acquiring an image;
recognizing a predetermined gesture from the acquired image; and
selecting a user who has made the gesture from the plurality of users and controlling the display apparatus to perform an operation corresponding to the selected user.

10. The control method according to claim 9, wherein the operation comprises at least one of setting an ID, logging in and zooming in and displaying the selected user.

11. The control method according to claim 9 or 10, further comprising:
storing face recognition information of a plurality of users; and
analyzing face recognition information of the selected user, comparing compares the analyzed face recognition information with the stored face recognition information of the plurality of users, and if the analyzed face recognition information is consistent with the stored face recognition information, performing an a corresponding operation corresponding to by selecting the selected consistent user out of the operations which are capable of being performed by the display apparatus if the image comprising the plurality of users is acquired through the image acquirer and the predetermined gesture is recognized from the acquired image.

12. The control method according to claim 11, further comprising analyzing face recognition information of the selected user, comparing the analyzed face recognition information with the stored face recognition information of the plurality of users, and if the analyzed face recognition information is not consistent with the stored face recognition information, storing the face recognition information of the selected user.

13. The control method according to claim 11, further comprising controlling the storage unit to store therein metadata corresponding to the stored face recognition information of the plurality of users.

14. The control method according to claim 13, wherein the metadata comprise at least one of display setting data, address book, visit records and viewing history of the display apparatus.

15. The control method according to any one of claims 9 to 14, further comprising:
receiving a broadcasting signal; and
processing the received broadcasting signal.
